Europäisches Patentamt

European Patent Office

Office européen des brevets

(19)

(11) Publication number : **0 565 333 A2**

# (12) EUROPEAN PATENT APPLICATION

(21) Application number : **93302665.0**

(22) Date of filing : **05.04.93**

(51) Int. Cl.$^5$ : **H04N 9/64, H04N 9/45**

(30) Priority : **06.04.92 GB 9207506**

(43) Date of publication of application :
**13.10.93 Bulletin 93/41**

(84) Designated Contracting States :
**DE FR GB IT**

(71) Applicant : **QUESTECH LIMITED**
**Eastheath Avenue**
**Wokingham Berkshire RG11 2PP (GB)**

(72) Inventor : **Tyson, Peter**
**1 Ilex Close, Pamber Heath**
**Basingstoke, Hampshire RG26 6DW (GB)**

(74) Representative : **Bubb, Antony John Allen et al**
**GEE & CO. Chancery House Chancery Lane**
**London WC2A 1QU (GB)**

(54) **Apparatus for processing a pal colour television signal.**

(57) The phase of a burst locked oscillator (7) controlling a PAL chrominance decoder (4) is controlled by a processor including means (11,12) for summing V and U chrominance signal components of picture signal samples provided by the decoder, means (13 to 16) for protecting the difference between summed V from alternate lines of the picture signal, means (20,21) for integrating the V-difference value over a field of the television signal, and a second order loop filter (23) via which the integrated signal is applied to the oscillator (7) in a feed back loop to correct the phase of the oscillator.

Fig 3

EP 0 565 333 A2

This invention concerns a system for processing a digital colour television signal, including means for correcting phase errors in digitally sampled chrominance signal components.

A system for digitally sampling a television signal and including means for phase adjustment of a clock oscillator controlling the sampling process is known, for example, from EP-0461896A2. Such a system includes means enabling the phase of the sampling oscillator to be locked rapidly to the phase of the colour burst, for example upon change of signal sources.

However, imperfections in a colour television signal can occur where the reference colour burst at the start of the TV line period is not at the correct phase to demodulate the picture material due to incorrect delay adjustments at the inputs to a studio mixer, for example where differing lengths of studio cable cause signals to arrive at the mixing desk with varying delay or advance. with respect to the mixer reference. The result of colour burst to picture phasing error is an effect known as 'Hanover bars' where a moving pattern of colour lines can be seen on the screen, the intensity of which is in proportion to the phase error between the burst and picture information. The pattern moves relative to the picture because of the four field relationship between the PAL ident and the TV line structure and can be very visually disturbing on saturated areas of the picture. Any compensating process ideally would automatically detect and remove the error on incoming signals so that manual adjustment whilst monitoring the video source was not necessary.

It is accordingly an object of the present invention to provide means enabling correction of phase errors between the colour burst and picture image signals in a digitally sampled television picture signal.

The invention accordingly provides means for correcting phase errors in a digitally sampled PAL television signal comprising means for detecting differences between the oppositely phased chrominance signals on alternate lines of the PAL television signal, means for averaging the detected differences to provide an error signal and means for applying the error signal in a closed loop to vary the phase of the digital samples of the picture in ,a sense such as to reduce the loop error signal to zero. Thus, in a known arrangement as referred to above the closed loop error signal may be applied as a feed back control to a phase shifter for controlling the phase of a sampling oscillator locked to the colour burst of an original television signal.

Further preferred features and advantages of the invention will become apparant from the following description taken in conjunction with the accompanying drawings, in which:

Figures 1 and 1A are diagrams illustrating signal components of correct and phased distorted colour television signals respectively,

Figures 2A and 2B are corresponding wave form diagrams illustrating the demodulated components of the signals of Figs. 1A and 1B, and

Figure 3 is a block circuit diagram illustrating an apparatus in accordance with the invention, and Figures 4 and 5 are flow charts illustrating the operation of the device of Fig. 3.

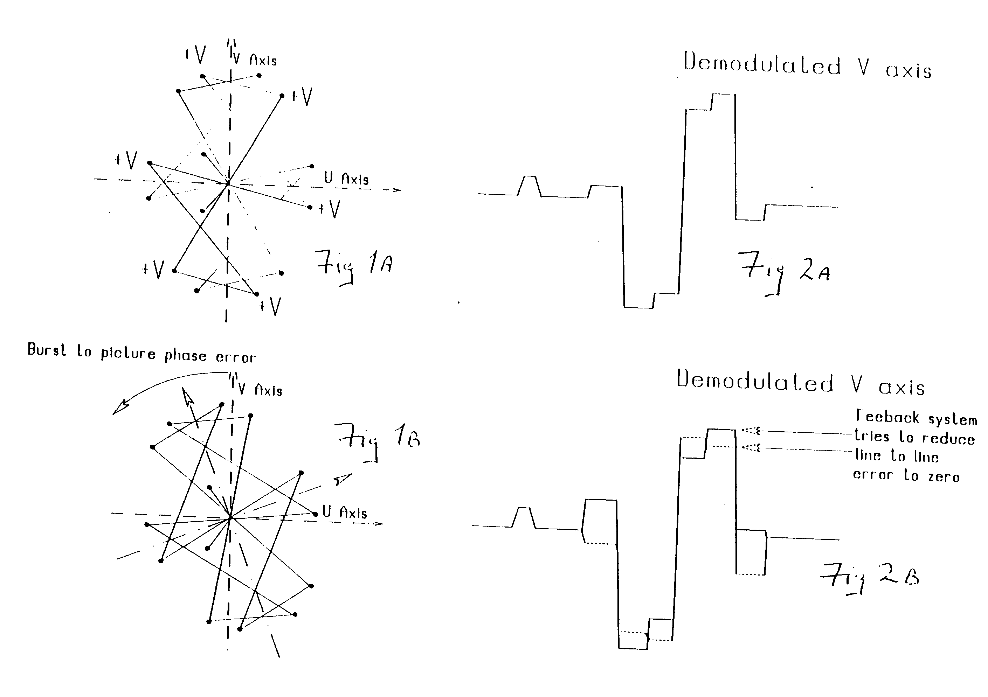

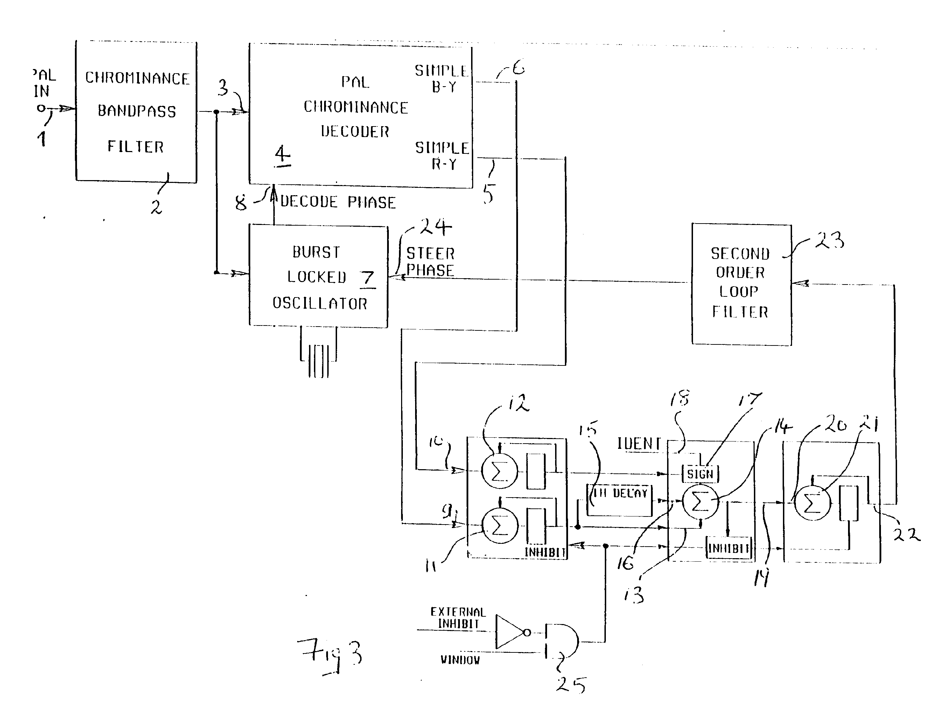

Referring to Fig. 1A, there is shown a colour vector diagram of a colour television signal plotted against the U and V axes wherein the points plotted correspond to the colours of a standard colour bar test signal that is correctly in phase. Fig. 2A illustrates a portion of the corresponding demodulated V chrominance signal wherein the magnitudes of the + V and - V ident pairs from alternate lines of the signal are identical. Figs. 1B and 2B are diagrams corresponding to Figs. 1A and 2A indicating the result of distortion of the colour signal by phase error of the chrominance signal in relation to the colour burst. In Fig. 2B the + V ident signal is indicated in broken lines and the - V ident signal is indicated in full lines. It will thus be seen that, assuming a signal representing uniform picture content, phase error can be detected in terms of a difference in the magnitude of the + V and - V ident signals on alternate lines of the picture.

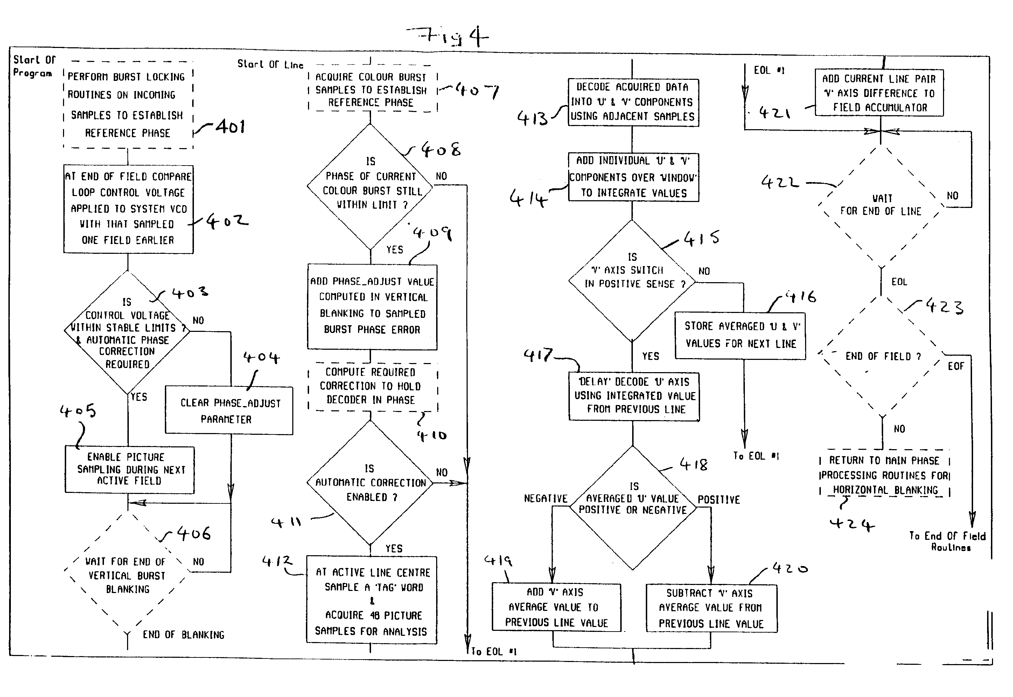

The present invention is based upon the concept of detecting the above-mentioned difference in magnitude and applying the same as a closed loop error signal in a feed back control system for varying the phase of sampled digital television signals. Fig. 3 illustrates in diagrammatic form a block circuit diagram of a control system in accordance with the invention. Although the block circuit diagram is illustrated in terms of an electronic circuit, it will be appreciated that in practice the same function can be provided by corresponding programming of an adaptive digital signal processor of the kind described in EP-0461896-A2. Accordingly, for a full understanding of the invention the present disclosure should be read in conjunction with the disclosure of Fig. 1 of EP-0461896-A2. Referring to Fig. 3, the reference numeral 1 indicates an input for receiving a PAL colour television signal.

A chrominance band pass filter 2 is arranged to filter the signal provided at input 1 and to provide an output signal to an input 3 of a PAL chrominance demodulator 4 having outputs 5 and 6 at which are provided, respectively, digital values of the V and U chrominance signal components sampled at four times the chrominance sub-carrier frequency as described in EP-0461896. The operation of the demodulator 4 is synchronised to the colour burst of the PAL television signal by means of a variable frequency oscillator 7 providing a clock signal to a further input 8 of the decoder 4. The phase and frequency of the oscillator 7 are controlled initially in the manner described in EP-0461896-A2.

The outputs 5 and 6 are coupled to corresponding inputs 9 and 10 of integrators 11 and 12. The output of integrator 11 is coupled directly to a first input 13 of a comparator 14 and, via a one line delay means 15, to a second input 16 of the comparator 14. A further input of the comparator 14 is coupled to a controller 17 arranged to receive signals on the one hand from the output of the integrator 12 and on the other hand from an input 18 that is arranged to provide a signal determining whether the output from the integrator 11 represents a signal of + v or - v ident type. An output 19 of comparator 14 is coupled to a input 20 of a further integrator 21 having an output 22 that is coupled via a second order loop filter 23 to a phase shifting input 24 of the oscillator 7.

A logic gate 25 is arranged to provide an output signal for inhibiting the operation of the device as described in more detail below.

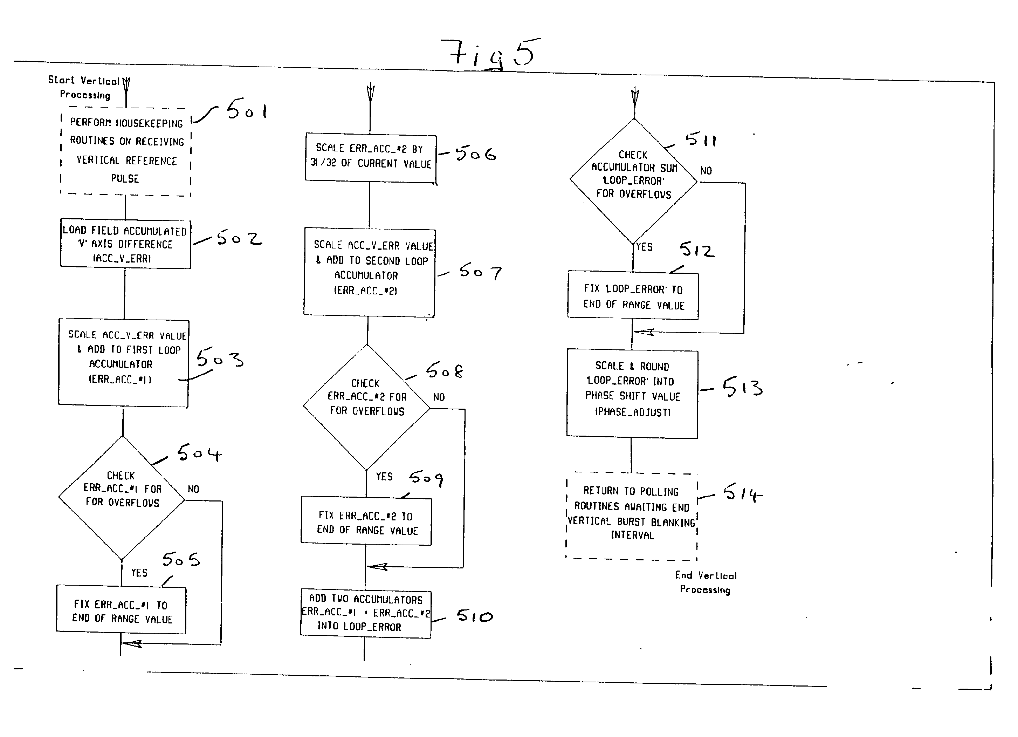

As already mentioned above, the functions performed by the circuit of Fig. 3 can be performed by a control program applied to the device of EP-0461896, and Figs. 4 and 5 of the accompanying drawings illustrate corresponding flow charts setting out the relevant programme steps.

Fig. 4 shows the initial processing which starts the correction routines, and then describes the routines which acquire picture data, decode and integrate the samples and accumulate the line to line differences.

Fig. 5 represents processing performed during vertical blanking when the system computes the phase error, filters the result and establishes the amount of correction applied by the loop for the next field.

Processing which is enclosed in dashed outline illustrate procedures which involve burst phase acquisition and are described in EP-0461896-A2.

However, the same functional system could be built as a hardware solution which would operate at higher speed and over a larger 'window' of active picture. Such an arrangement would follow the general construction illustrated in Fig. 3, and would operate as follows.

The television signal to be corrected is sampled at four times the colour sub-carrier frequency and passes via the band pass filter 2 and PAL demodulator 4 to supply a continuous sequence of U and V chrominance sample pairs to the intergrators 11 and 12. The operation of the integrators 11 and 12 and the subsequent circuitry is controlled by the logic gate 25 to which an enabling signal is provided when it has been establised that the phase of the oscillator 7 has been safely established from the colour burst. The logic gate 25 is then caused to enable the integrators 11 and 12 to receive a set of demodulated picture samples from a portion of the picture corresponding to a window in the centre of the current active line. The demodulation of the U and V component samples must be a 'simple' demodulation of the PAL signal, that is the colour component demodulation is performed without the use of a one line delay.

The integrated value of the V samples is applied to inputs 13 and 16 of the comparator 14, and by means of a corresponding input signal provided at 18, the comparator 14 is caused to subtract the value provided at input 13 from the value provided at input 16, when the line of picture being sampled is of a - V ident type. Thus, during alternate line periods, or consecutive periods when the line is of - V ident type, the value of the - V signal is subtracted from the value of the + V signal from the previous line provided to input 16 via the one line delay 15. The corresponding value at the output of the comparator 14 is provided to the input 20 of the integrator 21 with a sign that is determined by the sign of the integrated U signal component provided at the output of the integrator 12. This enables the output signal to be corrected to take account of the phase quadrant in which the colour vector lies. If the U component is positive, then the V axis difference has the correct sign and is added directly into the main difference accumulator formed by the integrator 21 for the whole field. Negative values of U indicate that the phase difference is in the opposite sense and the V component difference must be negated to indicate the correct direction of shift before being added to the main accumulator 21.

The above process is repeated for each line of a picture field in order to provide one integrated sample to the main accumulator 21 for each pair of lines. The width of the window provided by the period for which the gate 25 is enabled during scanning of each line may be varied in accordance with requirements. Longer accumulation times provided by the acquisition of more samples from each line have the advantage of increasing the magnitude of line pair colour components to be compared, but involve correspondingly greater expense.

At the end of the field, during vertical blanking, the signed accumulated differences in the accumulator 21 produce an integrated error which is in proportion to both the phase error itself, and to the average amplitude of the V component. The error for that field is then applied to the loop filter 23 which is implemented as a double accumulator type to give a second order filter response. The output of the loop filter is then used as a signed phase offset 24 to the sampling oscillator 7, demodulating the picture along the correct axis with respect to the picture sub-carrier, and eliminating the 'Hanover Bars' effect. The fact that the computed error is in proportion to the amplitude of the V component, as well as the phase error over the accumulation times, does not overly impair the correction result, as it affects the closed loop gain. The gain determines the velocity at which the loop reaches zero error, but as phase errors in very low saturation areas are not very noticeable, visual result of slowly applied corrections is virtually imperceptible. It will be appreciated that the closed loop must have a long time constant so as to make any correction over many fields, and to prevent sudden changes in the output error signal, otherwise variation in picture content may cause sudden erroneous phase changes to the demodulator which may disturb the output picture.

It will be appreciated that various alterations may be made to the arrangement as described above without departing from the scope of the invention. Thus, for example, although the U and V samples applied to the integrator 11 and 12 are illustrated as being provided in real time from a PAL demodulator 4, it would be possible for the demodulated picture samples to be provided not in real time by means of a software based decoding process wherein the processor demodulates the data and uses adjacent samples to separate the U and V components into individual registers.

Referring back to Figs. 4 and 5 of the drawings, the software routine capable of being carried out by the device of EP-0461896 will now be described in more detail. The known device samples the composite PAL video signal by locking the digitising process to four times the colour sub-carrier frequency at an angle of 45 degrees to the B-Y & R-Y axes, using the PAL colour burst as the reference phase. This effectively demodulates and mixes the U and V colour information into four sample types comprising (U+V), (U-V), (-U+V) and (-U-V). To identify which (U,V) components a particular sample represents, a two bit 'tag' word derived from a counter locked to the sampling frequency is fixed to each sample type in the system. For ease of comparison with the device already described in the latter Patent Specification, the process steps carried out by the known device are indicated in broken lines as steps 401,406,407,410,422,423,424,501 and 515. The remaining process steps indicated in full lines are those required to be incorporated in the known procedure in order to perform error correction in accordance with the present invention. Thus, at the end of each field of the video signal, steps 402 and 403 are performed to check the stable operation of the known process and the subsequent execution of the additional process in accordance with the present invention is either enabled in step 405, or is bypassed in step 404. In the latter case the process according to the invention is omitted during the next field and the processor continues with the routines relevant to the porocess of EP-0461896.

In step 408 a further check on the operation of the known process is conducted at the commencement of each line and phase adjustment thereby is either carried out in steps 409 and 410 or the process branches directly to step 422. Step 411 determines whether step 405 has been performed and the process either continues with step 412 or branches to step 422. In the former case the process in accordance with the present invention is commenced by sampling a 'tag' word to identify picture samples and acquiring 48 picture samples for analysis at the active centre of the current line. The use of a 'tag' word to enable the processor to identify the incoming picture samples is described in EP-0461896. Suffice it to say that in this process step a horizontal window of 48 picture samples is defined at the centre of the video image frame. This enables the processor to limit the computations performed to a small central area of the video image. However, the window of 48 samples is not started on a fixed (U,V) sample type and the 'tag' word is used to determine which combination of (U,V) types the sample actually represents, before separating the individual U & V components from the data words.

In step 413, the acquired data is decoded into U and V components by simple summation/subtraction of horizontal samples on components with opposing signs. For example

$$(U+V) + (-U+V) = 2V$$
$$(-U+V) + (-U-V) = -2U$$

Negative components may then be inverted before summation into the integrator. In step 414 the individual U and V components from the defined window are added to provide integrated values. This function is equivalent to that performed by components 11 and 12 of Fig.3.

In step 415 it is determined whether the V axis signal is positive or negative using the PAL 'ident' signal from the known process. If negative the values determined in step 414 are stored for use in the next line, in step 416, whereas if the V axis signal is positive the value of the U axis signal is 'delay' decoded using the integrated value from the previous line to remove the effect of any phase errors from the U component. The resulting value is to be used only to determine the direction of the V component phase error. In step 418 it is determined whether the U component is positive or negative and the average V axis value is either added to or subtracted from the value of the previous line in step 419 or step 420, for the reason already described above with reference to Fig.3. The resulting difference signal is then added to a field accumulator in step 421.

Steps 422 and 423 determine whether the end of the image field has been reached. If not the process returns to step 407, and if the end of the field has been reached the process continues to step 501.

The software routine of Fig.5 is required to provide the function of a second order loop filter corresponding to the filter 23 of Fig.3, and it will be seen that this is achieved by the use of two loop accumulators that are respectively loaded with the V axis difference accumulated over a complete field of the video image, this V axis difference being scaled by different factors before being added to the respective accumulators in steps 503 and 507. The first accumulator receives a very small proportion of the difference signal in step 503 whereas the second accumulator receives a larger proportion, typically increased by a factor of four or eight. Before the second accumulator receives the scaled value of the difference signal, the value held in that accumulator is reduced in step 506.

In step 513 the result of the second order loop filter computation is applied to the phase shifter as described above with reference to Fig.3.

In another embodiment of the invention, the system may be neither completely implemented in software nor in hardware, but by a mixed technology solution wherein the colour difference signals are sampled from the output of an analogue PAL decoder, and then processed in accordance with the invention to provide an output error signal to a digital to analogue converter for controlling the phase of an analogue burst locked oscillator.

A comb filtering process may be used to ensure that any luminance energy in the chrominance path is removed prior to PAL demodulation in order to reduce the possibility of false detections, and the U and V components for line pairs can be examined to determine whether there has been vertical detail in the picture so that the signals of the V ident pair are uncorrelated, in which case the process of accumulating picture samples can be inhibited until vertical correlation is once more achieved. The detection of vertical detail would best be performed on blocks of picture points and lines, so that a change in a small area of the picture would not discard the adjacent values which were still correlated.

**Claims**

1. A signal processing apparatus for processing a PAL colour television signal, comprising a PAL decoder, an oscillator (7) for controlling said decoder, a phase shifter (24) for controlling the effective phase of said oscillator (7) and a signal processing means (9-23) for processing samples of said television signal and for providing a phase correction signal to said phase shifter (24) in a feed back loop, characterised in that said processing means comprises means (4-6,9-19) for detecting differences between oppositely phased chrominance signals on alternate lines of the PAL television signal, means (21,22) for averaging the detected differences to provide an error signal and means (23) for applying the error signal to said phase shifter (24).

2. An apparatus according to Claim 1, characterised in that said processing means is arranged to sum the values of each of the V chrominance signal components for a plurality of signal samples in each line of a picture signal to accumulate the differences between summed values of V signals for adjacent pairs of lines over a complete field of the picture signal, and to apply the accumulated value of the V signal differences as an error correction signal at the end of each field of the picture signal.

3. An apparatus according to Claim 2 characterised in that said processing means is arranged to derive said plurality of signal samples from a limited window at the centre of each line of the picture signal.

4. An apparatus as claimed in Claim 2 or 3, characterised in that said processing means is arranged to determine the difference in summed values of V signal components of said picture signal samples, by decoding the U axis signal using the summed U values for alternate lines and a V ident signal, and by adding or subtracting the pairs of summed V axis signals depending upon the sign of the decoded U axis signal.

5. An apparatus as claimed in any one of Claims 1-4, characterised in that said signal processor is arranged to derive said error signal by passing said accumulated V axis difference signal through a second order loop filter.

6. An apparatus as claimed in Claim 5, characterised in that said second order loop filter is formed by adding the said V axis difference signal to each of two accumulators after scaling the said signal by different factors, and by then taking the sum of the values held in the two accumulators as the error signal.

7. An apparatus as claimed in Claim 6, characterised in that the content of that accumulator which is to receive the larger of the two scaled values is reduced by scaling the value therein before the scaled V axis signal is added thereto.

8. An apparatus according to any one of Claims 1-7, characterised in that said processing means is arranged to apply said error signal as a secondary signal in addition to a primary error correction signal for locking the phase of the oscillator to the colour burst of the PAL television signal, and that said processing means is arranged to enable or disable the means for providing the secondary signal depending upon whether the said primary signal is detected as being within stable limits.

9. An apparatus according to Claim 8, characterised in that said processing means is arranged to test said primary signal at the commencement of each field of the television signal.

10. An apparatus according to Claim 9, characterised in that said processing means is arranged to test said primary signal at the commencement of each line of the television signal.

EP 0 565 333 A2

+V    V Axis
+V
+V                U Axis
+V

Fig 1A

Burst to picture phase error

V Axis

Fig 1B

U Axis

Demodulated V axis

Fig 2A

Demodulated V axis

Feeback system tries to reduce line to line error to zero

Fig 2B

EP 0 565 333 A2

PAL
IN

CHROMINANCE
BANDPASS
FILTER

2

PAL
CHROMINANCE
DECODER

4

SIMPLE
B-Y

6

SIMPLE
R-Y

5

3

DECODE PHASE

8

BURST
LOCKED 7
OSCILLATOR

24

STEER
PHASE

SECOND
ORDER
LOOP
FILTER

23

12

10

Σ

9

Σ

INHIBIT

11

15

1H DELAY

IDENT 18

SIGN

Σ

INHIBIT

16

13

17

14

Σ

20 21

22

19

EXTERNAL
INHIBIT

WINDOW

25

Fig 3

Fig 4

EP 0 565 333 A2

Start Of Program

401 — PERFORM BURST LOCKING ROUTINES ON INCOMING SAMPLES TO ESTABLISH REFERENCE PHASE

402 — AT END OF FIELD COMPARE LOOP CONTROL VOLTAGE APPLIED TO SYSTEM VCO WITH THAT SAMPLED ONE FIELD EARLIER

403 — IS CONTROL VOLTAGE WITHIN STABLE LIMITS ? & AUTOMATIC PHASE CORRECTION REQUIRED
NO → 404 CLEAR PHASE_ADJUST PARAMETER
YES ↓

405 — ENABLE PICTURE SAMPLING DURING NEXT ACTIVE FIELD

406 — WAIT FOR END OF VERTICAL BURST BLANKING
NO
END OF BLANKING

Start Of Line

407 — ACQUIRE COLOUR BURST SAMPLES TO ESTABLISH REFERENCE PHASE

408 — IS PHASE OF CURRENT COLOUR BURST STILL WITHIN LIMIT ?
NO
YES ↓

409 — ADD PHASE_ADJUST VALUE COMPUTED IN VERTICAL BLANKING TO SAMPLED BURST PHASE ERROR

410 — COMPUTE REQUIRED CORRECTION TO HOLD DECODER IN PHASE

411 — IS AUTOMATIC CORRECTION ENABLED ?
NO →
YES ↓

412 — AT ACTIVE LINE CENTRE SAMPLE A 'TAG' WORD & ACQUIRE 48 PICTURE SAMPLES FOR ANALYSIS
→ To EOL #1

413 — DECODE ACQUIRED DATA INTO 'U' & 'V' COMPONENTS USING ADJACENT SAMPLES

414 — ADD INDIVIDUAL 'U' & 'V' COMPONENTS OVER 'WINDOW' TO INTEGRATE VALUES

415 — IS 'V' AXIS SWITCH IN POSITIVE SENSE ?
NO → 416 STORE AVERAGED 'U' & 'V' VALUES FOR NEXT LINE → To EOL #1
YES ↓

417 — 'DELAY' DECODE 'U' AXIS USING INTEGRATED VALUE FROM PREVIOUS LINE

418 — IS AVERAGED 'U' VALUE POSITIVE OR NEGATIVE
NEGATIVE → 419 ADD 'V' AXIS AVERAGE VALUE TO PREVIOUS LINE VALUE
POSITIVE → 420 SUBTRACT 'V' AXIS AVERAGE VALUE FROM PREVIOUS LINE VALUE

EOL #1

421 — ADD CURRENT LINE PAIR 'V' AXIS DIFFERENCE TO FIELD ACCUMULATOR

422 — WAIT FOR END OF LINE
NO
EOL ↓

423 — END OF FIELD ?
EOF → To End Of Field Routines
NO ↓

424 — RETURN TO MAIN PHASE PROCESSING ROUTINES FOR HORIZONTAL BLANKING

Fig 5

EP 0 565 333 A2

Start Vertical Processing

PERFORM HOUSEKEEPING ROUTINES ON RECEIVING VERTICAL REFERENCE PULSE — 501

LOAD FIELD ACCUMULATED 'V' AXIS DIFFERENCE (ACC_V_ERR) — 502

SCALE ACC_V_ERR VALUE & ADD TO FIRST LOOP ACCUMULATOR (ERR_ACC_#1) — 503

CHECK ERR_ACC_#1 FOR FOR OVERFLOWS — 504 — NO

YES — 505

FIX ERR_ACC_#1 TO END OF RANGE VALUE

SCALE ERR_ACC_#2 BY 31/32 OF CURRENT VALUE — 506

SCALE ACC_V_ERR VALUE & ADD TO SECOND LOOP ACCUMULATOR (ERR_ACC_#2) — 507

CHECK ERR_ACC_#2 FOR FOR OVERFLOWS — 508 — NO

YES 509

FIX ERR_ACC_#2 TO END OF RANGE VALUE

ADD TWO ACCUMULATORS ERR_ACC_#1 + ERR_ACC_#2 INTO LOOP_ERROR — 510

CHECK ACCUMULATOR SUM LOOP_ERROR' FOR OVERFLOWS — 511 — NO

YES 512

FIX LOOP_ERROR' TO END OF RANGE VALUE

SCALE & ROUND LOOP_ERROR' INTO PHASE SHIFT VALUE (PHASE_ADJUST) — 513

RETURN TO POLLING ROUTINES AWAITING END VERTICAL BURST BLANKING INTERVAL — 514

End Vertical Processing

10